# EUROPEAN PATENT APPLICATION

(11) **EP 1 920 745 A2**
(43) Date of publication of application: **14.05.2008**
(21) Application number: 07120197.4
(22) Date of filing: 07.11.2007
(51) Int. Cl.: A61G 1/06, A61G 3/00

(54) **Patient support securing apparatus**

(30) Priority: 09.11.2006 GB 0622347; 16.02.2007 GB 0703052
(71) Applicant: Rastrick Engineering Limited, HD6 1DA West Yorkshire Brighouse (GB)
(72) Inventor: Tindall, Frank, Brighouse, HD6 1DA (GB)
(74) Representative: Sherrard-Smith, Hugh

(57) **Abstract**

A patient support 2, such as a stretcher or chair, is secured to a support 8, which may be fixed to the ground or may include wheels for engaging with spaced rails, by means of a securing apparatus. The securing apparatus includes a lock arrangement on the support 8. In use, the lock arrangement secures a part of a patient support. The lock arrangement includes a first path and a second path that extend in different directions. The first part is able to enter both paths by relative movement between the stretcher and support in the direction of the first path followed by the second path. When the part is in the second path, a lock is moveable from a first, open, position to a second, closed, position. When the part is in the second path and the lock is in the closed position, the lock prevents the return of the part back along the first path.

## Description

This invention relates to a patient support securing apparatus and a method of securing a patient support.

During sea rescues, divers are generally deployed into the water to guide a stretcher under the stricken patient. The stretcher can be winched down from a helicopter or boat. After the divers have located the stretcher under the patient, the stretcher is winched upwards to scoop the patient out of the water. The stretcher is then placed on the boat, where medical staff treat the patient. Once treatment is completed, walking wounded may sit in chairs on the boat, and more seriously injured patients may be moved to other stretcher locations.

Whilst in the stretchers, patients may be transported onto a helicopter, whilst the boat is still at sea, and/or may be moved to an ambulance.

During the time the patient is transported in the stretcher, and particularly whilst in the rescue boat or helicopter, there is a lot of movement, for example, because of the stormy nature of the sea. This movement causes problems when securing the stretcher to the boat. Furthermore, when a patient has to be operated on or transferred to a helicopter or from a helicopter the patient is moved from one stretcher to another. This is a dangerous event.

It is an object of the present invention to attempt to overcome at least one of the above or other disadvantages.

According to a first aspect of the present invention, there is provided patient support securing apparatus including a lock arrangement arranged, in use, to secure a part of a patient support, the lock arrangement including a first path and a second path extending in a different direction to the first path and with , in use, relative movement between a part of the patient support and the paths in different directions is arranged to enable the part of the patient support to enter the first path and then the second path, the lock arrangement including a lock moveable between a first position and a second position which, when in the second position, prevents the return of the part of the patient support located in the second path back along the first path.

Preferably movement of the part of the patient support along the first path causes the lock to move from the second position to the first position. The lock member may be biased towards the first position.

1. Preferably in use, the relative movement of the part and the lock arrangement to cause that part to enter the first and second paths, when the lock is in the second position, is arranged to cause the lock to move from the second position to the first position when the part is located in the second path the lock is caused to move from the first position to the second position.

The lock arrangement may include a lever connected to the lock whereby the lock may be moved from the second position to the first position. The lock may be pivotally moveable between the first and second positions. The pivot axis of the lock may be spaced from the paths. The lock may be clear of the first and second paths when in the first position. A line from the pivot axis of the lock member to the region where a part of a patient support will be secured may pass through the first path.

Preferably the first and second paths extend from at least one side of the lock.

Preferably the first and second paths entered from both sides of the lock. The apparatus may include a plurality of spaced locks. The locks may be connected to each other and may be constrained to move together between the first and second positions.

Preferably at least one of the paths is defined by a channel. Both paths may be defined by a channel. The or each lock may be arranged to move through an opening in the or each channel. The or each opening may comprise a slot.

Preferably the second path is a closed path apart from a single opening to the first path in the direction from the first path to the second path.

Preferably a direction perpendicular to the paths is transverse to upright. A direction perpendicular to the paths may be horizontal.

Preferably the weight of at least part of the patient support is arranged to be carried by the lock arrangement during at least part of the movement of the part of the patient support along the second path.

Preferably the lock arrangement is arranged, in use, to carry part of the weight of the patient support.

Preferably the lock arrangement is arranged, in use, to support a transverse member of the patient support.

Preferably a second pair of first and second paths spaced from the first pair with spaced parts of the patient support being arranged to enter the first and second paths of each pair whereby the patient support is arranged, in use, to be secured at two spaced locations. Only one of the pairs may include a lock. The second pair of paths may include any of the features of the first pair of paths.

Preferably the first paths extends in a downwards direction. The first path extends transverse to the downwards direction.

Preferably the apparatus includes wheels that can support the apparatus when moving the apparatus. The wheels may be arranged to engage spaced rails.

Preferably the apparatus includes two spaced lock arrangements each being arranged, in use, to secure different patient supports.

According to a further aspect there is provided a patient support for use in being secured by the apparatus as defined in any preceding Claim.

According to a further aspect there is provided apparatus according to the first aspect in combination with a patient support.

The patient support securing apparatus may be substantially as herein described with reference to and as shown in any of the accompanying drawings.

According to a further aspect there is provided a method of securing a patient support comprising causing relative movement of a part of the patient support and securing apparatus along a first path and then a second path extending in a different direction than the first path and preventing relative movement from the second path to the first path by a lock being moved from a first to a second position.

Preferably the method may comprise causing the lock member to move to the second position when the part moving along the second path has passed a predetermined extent. The lock may be biased to the second position. The part of the patient support that moves along the paths may be arranged to move the lock from the second to the first position along part of that movement. The method may comprise causing the part of the patient support that is secured to be secured such that no lateral movement can occur between that part and the part to which it is secured. The method may comprise securing a first member of a patient support with the lock and securing a second member of the patient support spaced from the first member by causing the second member to move along a first path and then a second path extending in a different direction to the first path. Both first paths may be caused to extend in the same direction. Both second paths may be caused to extend in the same direction. The second member may be prevented from returning from the second path by the lock member that secures the first member. The part may be caused to be secured in one direction by the lock member and in the opposite direction by abutment with one end of the second path and in a direction perpendicular to the direction of movement along the second path by abutment with sides of the paths. The method may comprise causing securing a patient support and moving the part to which the support is secured on wheels. The method may comprise causing movement of the patient support by wheels rolling on rails. The method may comprise causing securing two patient supports to a common moveable support. The moveable support may be moved manually.

Preferably the method of securing a patient support is substantially as herein described with reference to and as shown in any of the accompany drawings. The method may comprise securing apparatus as herein described.

The patient support may comprise a stretcher or a chair.

The present invention is further defined in the claims or elsewhere in this specification.

The present invention can be put into practice in various ways, but two examples will now be described, with reference to the following figures in which:-
Figure 1 is a top perspective view of a stretcher in accordance with a first embodiment of the present invention.
Figure 2 is a bottom perspective view of a stretcher in accordance with the first embodiment.
Figure 3 is an enlarged view of Figure 2 showing an engaging means in accordance with the first embodiment.
Figure 4 is a top perspective view of a supporting part in accordance with the first embodiment.
Figure 5 is an enlarged view of Figure 4, showing disengaged latch, in accordance with the first embodiment.
Figure 6 is a top perspective view of the supporting part that better shows a retaining area of the securing means of the first embodiment.
Figure 7 is a bottom view of the securing element of the first embodiment.
Figure 8 is a perspective view of a chair stretcher positioned on a rail mounted support in accordance with a second embodiment of the present invention.
Figure 9 is an enlarged view of Figure 8, showing the securing means of the second embodiment.
Figure 10 is a side view of an alternative support part in accordance with the first embodiment of the present invention.

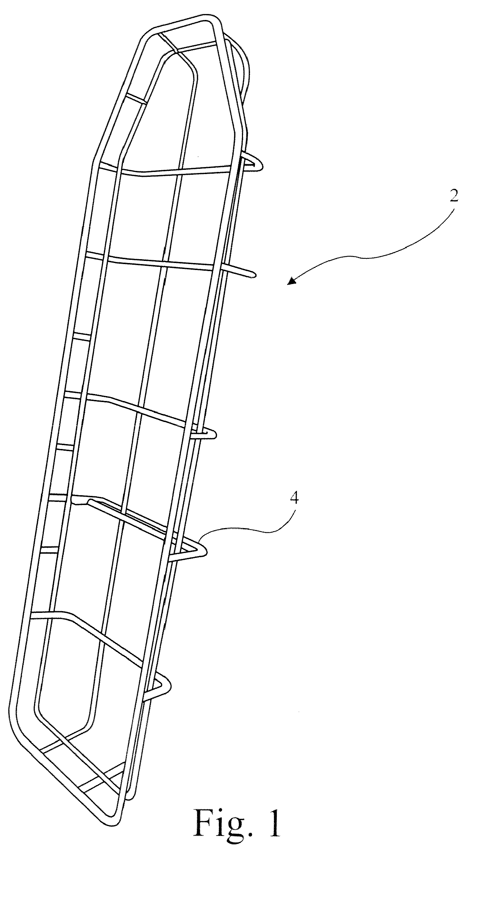

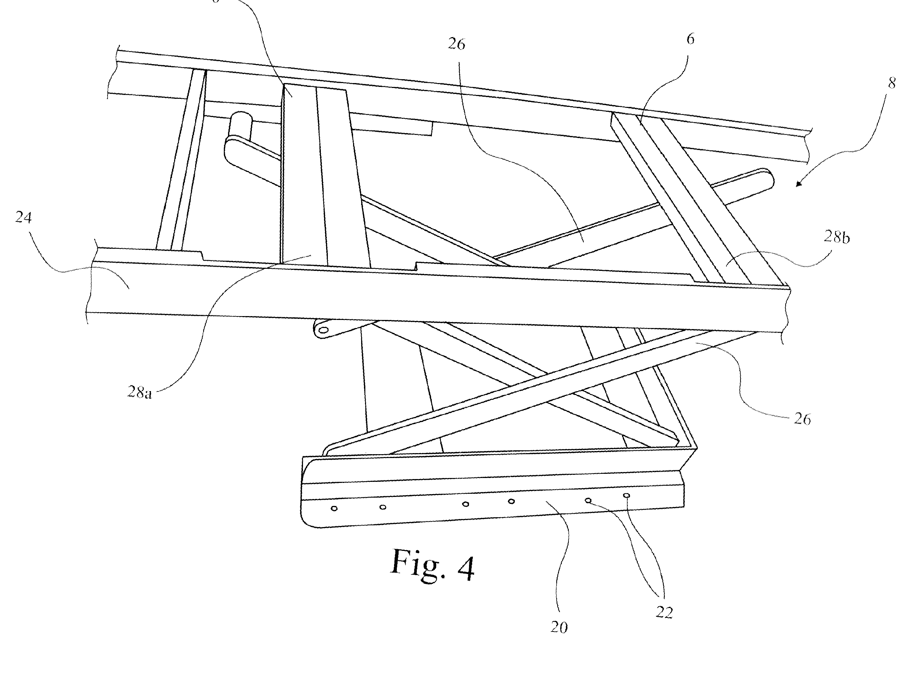

Figure 1 shows a patient support for use with the present invention. The patient support is a stretcher for transporting patients. As shown in Figure 4, the stretcher 2 includes a bar 4 that engages with a lock 6 located on a support 8. In use the stretcher can be secured to the support by moving the stretcher relative to the support in a first, downward direction followed by a second movement in the direction along the length of the stretcher. Movement of the stretcher in the first direction causes abutment between the bar and pivoted latches 30 to move the latches from a first, closed position to a second, open position. Movement in the second direction is stopped by abutment of the bar 4 within a retaining area. When in the coupled position the bar 4 is clear of the latches 30. A spring, biases the latches 30, to the closed position. When in the closed position, the stretcher is restricted from moving in a decoupling direction by abutment of the bar and latches.

The stretcher can be decoupled from the support by operating a lever 36, which rotates the latches 30 against the biasing spring in order to move the latches to the open position. Whilst in the open position the stretcher is free to move in a direction opposite to the second direction. Thus the stretcher can be slid horizontally to free the stretcher without an operative having to lift the stretcher when effecting the decoupling. When the bars 4 are free from the retaining area, the stretcher can be decoupled from the support by relative upwards movement.

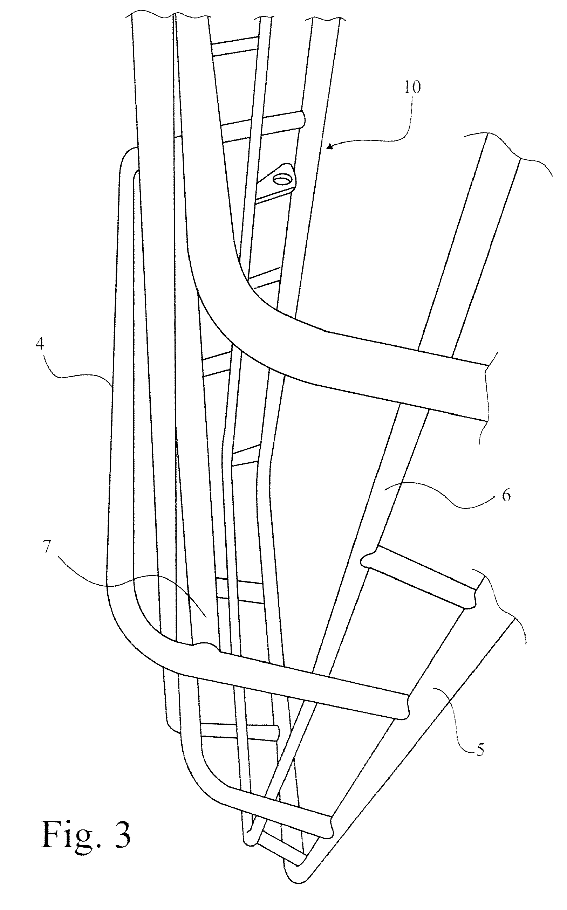

The stretcher will now be described further with reference to Figures 1-3. The stretcher includes a frame 10 of tubular rods which forms a cradle that supports a mattress (not shown). The bar 4, is integral to the frame construction and extends across the width of the stretcher below, and spaced from the cradle. The bar is attached to each upper side member 5 of the stretcher and extends downwardly and is further attached to lower side members 6. A reinforcing rod 7 is connected to the bar 4 at each side just above the horizontal part of the bar.

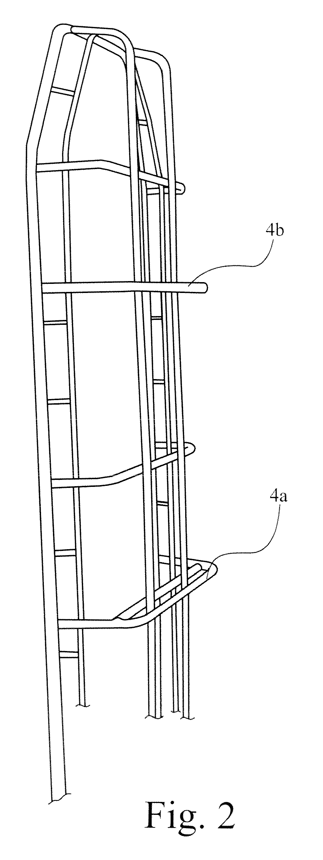

As can be seen in Figure 2, the stretcher includes two identical bars 4a and 4b. The bar 4a, is positioned towards the head of the stretcher and the bar 4b, is positioned towards the foot of the stretcher. The bars are parallel and spaced from each other along the length of the stretcher.

The support will now be described further with reference to Figures 4-7. The support comprises an adjustable table. The adjustable table includes a base 20 that is securable to the ground, for example the deck of a rescue boat. The base is secured to the deck by bolts extending through holes 22.

A table top 24 is mounted on the base by a pair of cross-arms 26. The cross-arms are pivoted together at their mid sections and are pivotally mounted to the base and table. Accordingly, a piston (not shown) that acts between the base and one of the cross-arms can be operated to raise and lower the table with pivots of the cross arms at one end sliding along the base and table in guides.

The table top is formed from a frame that includes two cross members 20. The cross members are spaced apart along the length of the table, in accordance with the spacing of the bars of the stretcher. The forward cross member 28a includes the retaining area. The rearward cross member 28b is identical to the forward cross member but also includes the latches 30.

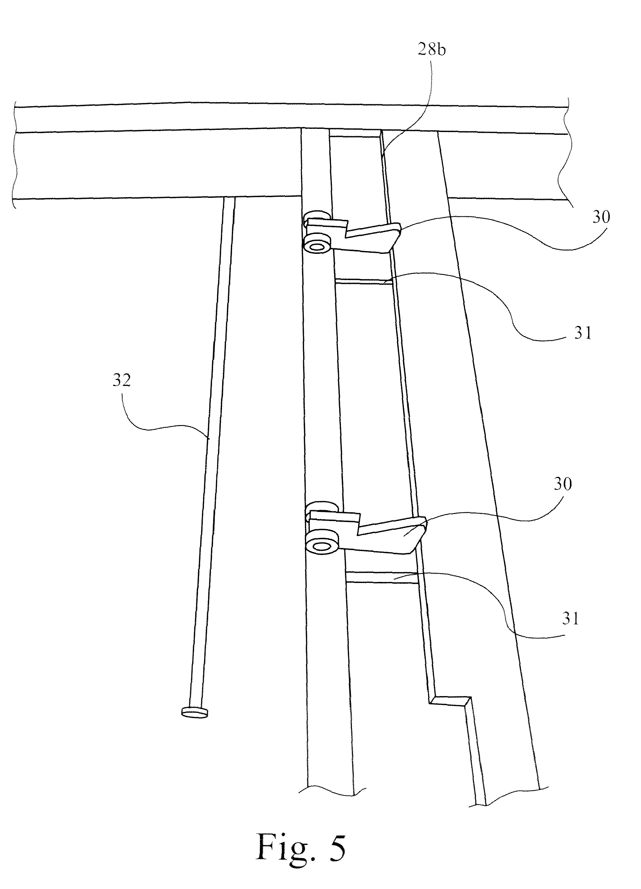

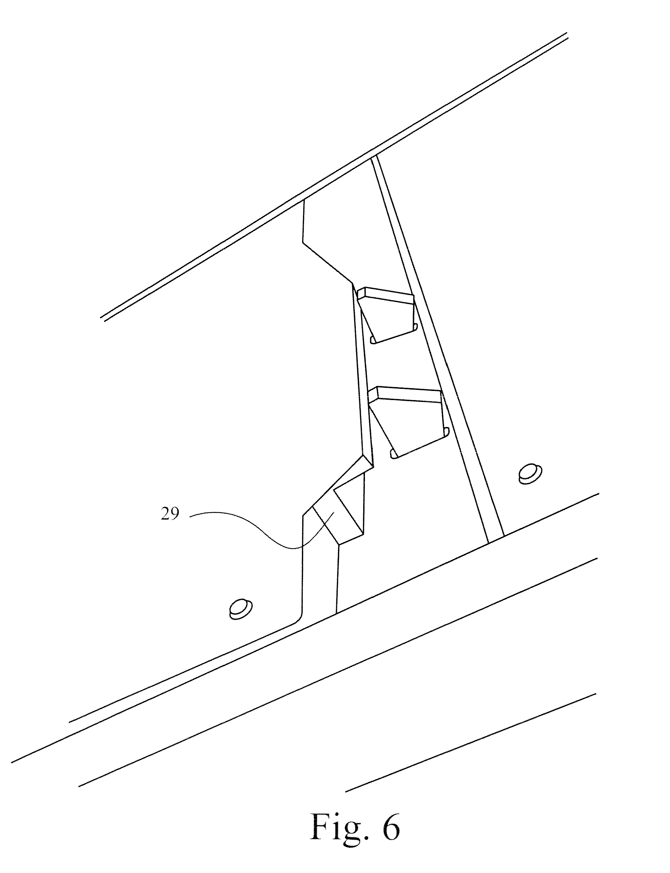

Figure 5 shows the rearward cross member 28b in more detail. The cross member 28b is a bent plate that extends between two side members 35 of the top. The plate is bent in to a U-shape with upwardly facing surfaces 37 on either side. The upwardly facing surfaces allow sheets 39 to be secured to the top of the table. As can be seen in Figure 6, the sheets 3d do not extend across a channel 41 created by the U-shaped plate. The U-shaped plate has two downwardly extending side walls and a bottom wall parallel to the table top. An angled section 29 is secured to one side wall such that a top wall 43 extends over part of the channel 41. Two slots 31 are formed in the bottom and opposing side wall.

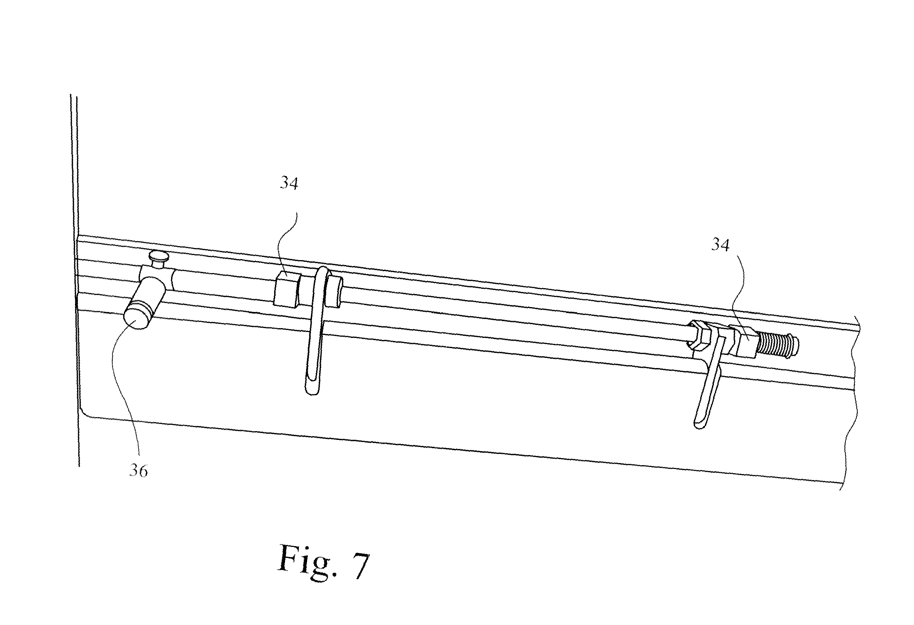

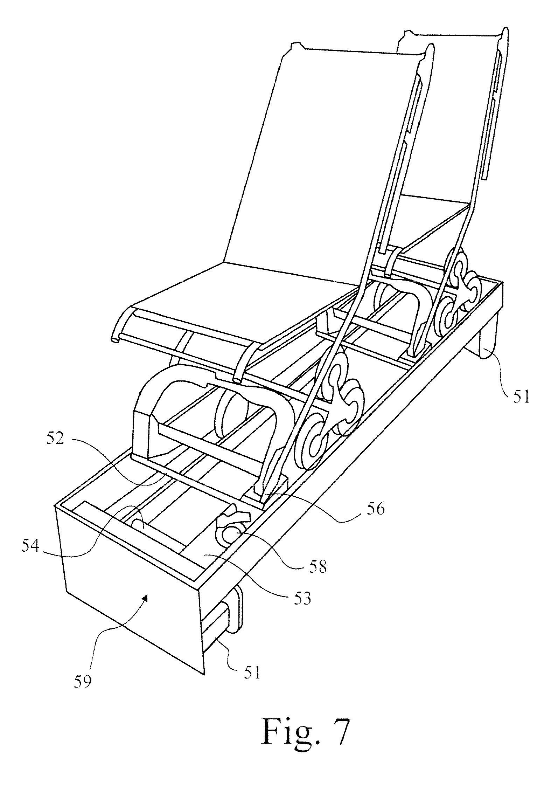

The latches 30 are shown partially assembled in Figure 5 and assembled in Figure 6. The latches are held fast to a rod 32 that extends through each part. Figure 7 shows the rod 32 and latches 30 assembled to the cross member 28b. The rod 32 is pivotally mounted to the cross member 28b by two protrusions 34 that are integral to the cross member 28b. The lever 36 is also held fast to the rod 32. A spring (not shown) is arranged to bias the pivoted parts to a closed position, where an edge of the latches 30 closes the area bounded by the angled section 29. Abutment between the latches 30 and the end of the slots 31 stop the rotation of the latches 30. The lever 36 can be turned to rotate the rod 32 and thus rotate the latches 30 downwardly within the slots 31 to an open position where the latches 30 do not close the area bounded by the angled section.

The axis of the rod 32 is located behind the forward cross member 28a at a height between the top and bottom of the retaining area.

In use, the stretcher is secured to the table top by aligning the bars 4 of the stretcher above the open channels on the cross members. Downward movement initiates the coupling. During the downward movement, the rods abut the latches 30 and urge them to rotate downwardly against the spring bias until the bars 4 abut the bottom wall of the cross members. The stretcher is then slid in the lengthwise direction to complete the coupling. The bars 4 move into the retaining area defined by the bottom wall of the cross member and two walls of the angled section. In the coupled position, the bars move clear of the latches to allow the latches to rotate upwardly under the bias of the spring to the closed position.

When coupled and the latches are in the closed position, the bars 4a and 4b are restricted from moving rearwardly by one face of the angled section, upwardly by the other face of the angled section, and downwardly by the bottom of each cross member. Furthermore, the stretcher is restricted from moving forwardly by the latches in the cross member 28b. Furthermore, the bar 4amay be in contact with the latches and the upwardly extending part of the angled section 29. Alternatively or additionally the bars 4a and 4b may also contact the downwardly facing surface of the angled section. Sideways movement is prevented by abutment of the uprights of the bars with the ends of the angled section 29 or the sides of the table or both. Accordingly, the stretcher is held fast to the table top.

Decoupling of the stretcher can be achieved by operating the lever in order to pivot the latches to the open position. The stretcher can then be moved forwardly until the rods abut the side wall of the cross member. In this position the rods also abut the top edges of the latches and restrict the upwards rotation of the latches to the closed position. The lever can then be released and the stretcher lifted upwardly to be free from the table top.

During use a patient is secured to the stretcher by straps (not shown). When the stretcher is mounted in a boat or helicopter the stretcher, and thereby the patient, is maintained firmly in position during movement of the boat or helicopter. Furthermore, the stretcher can be moved straight from a lock on the boat to a lock on the helicopter and then even to a lock on an operating table without a patient being transferred from one stretcher to another.

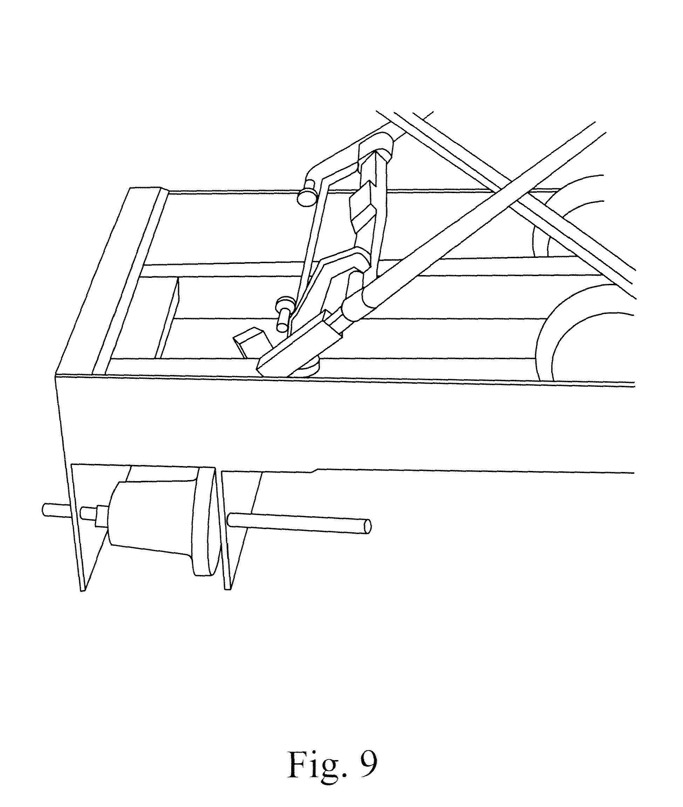

Figure 8 shows an alternative embodiment of the present invention. A bar 52 is fixed to a chair stretcher. The bar extends between two frame members 56 of the chair towards front wheels 58.

The chair stretcher is secured to a rail mounted platform 59 by engagement of the bar with a lock 54 that is attached to the platform. The rail mounted platform includes four wheels 51, arranged in two pairs for cooperating with standard train gauge tracks. The platform 59 includes two parallel spaced channels 53 in which the wheels of the chair stretcher are mounted.

The lock 54 is substantially in accordance with the first embodiment and is arranged across one end of the platform. An identical lock (not shown) is arranged across the platform partway down its length in order to secure a second chair trolley behind the first.

In this embodiment, the lock 6 is rotated through 90 degrees to that shown in Figures 4 to 7 such that the angled section 29 extends vertically, downwardly to partially obscure the channel. In this arrangement, coupling of the rod 32 and lock 6 is achieved by moving the rod horizontally and then upwardly. The horizontal movement causes the rod to abut the latches and move them in a clockwise direction when pivoting from the closed to the open position. When the rod abuts the closed face of the channel, the rod 32 is located under the retaining area. Upwards movement of the bar causes it to move to the locked position. The latch is then free to move to the closed position as previously described. The movement of the rod is achieved by moving a chair initially along the platform with the chair being tipped up to affect the upward movement of the bar.

In each embodiment the bars that are retained may be prevented from any movement in the fore and aft direction.

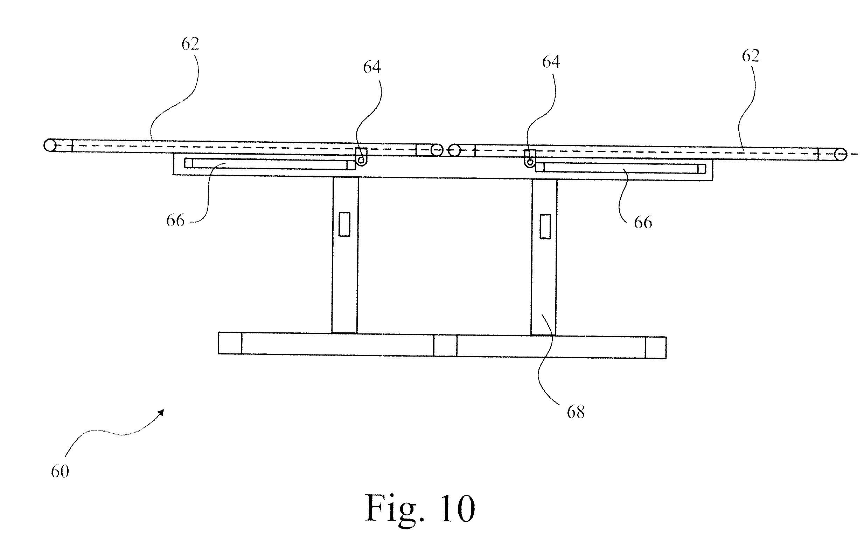

Figure 10 shows an alternative support for use with the first embodiment, wherein, rather than the supporting part being an adjustable table, the supporting part is a platform formed from the folded down backs of two back to back seats.

In normal use, for example on the patient seating area of a rescue boat, a row of back to back seats 60 is provided with the seat backs 62 in an upright position (not shown). The seat backs rotate about a pivot point 64 fixed to the seats 66. The seats are supported by a framework 68 that is secured to the ground or deck.

The lock is arranged on the top side of the seat backs when in the folded down position as shown in Figure 10. In this way they are accessible and operational substantially the same as that described in the first embodiment. When the seat backs are in the upright, chair position, the locks are not easily accessible.

The advantage of this embodiment is that the rescue boat can include chairs for walking wounded but convert extra space for stretcher storage, should it be needed, simply by folding the chair backs downwards. Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. Patient support securing apparatus including a lock arrangement arranged, in use, to secure a part of a patient support,
the lock arrangement including a first path and a second path extending in a different direction to the first path and with , in use, relative movement between a part of a stretcher and the paths in different directions is arranged to enable the part of a stretcher to enter the first path and then the second path,
the lock arrangement including a lock moveable between a first position and a second position which, when in the second position, prevents the return of the part of a stretcher located in the second path back along the first path.

2. Apparatus as claimed in claim 2 in which the movement of the part along the first path causes the lock to move from the second position to the first.

3. Apparatus as claimed in Claim 1 in which the lock member is biased towards the first position.

4. Apparatus as claimed in Claims 2 and 3 in which, when the part is located in the second path the lock is caused to move from the first position to the second position.

5. Apparatus as claimed in any preceding Claim in which the lock arrangement includes a lever connected to the lock whereby the lock is pivotally moveable between the first and second positions and the pivot axis of the lock is spaced from the paths, such that, the lock is clear of the first and second paths when in the first position.

6. Apparatus as claimed in any preceding Claim in which the weight of at least part of the patient support is arranged to be carried by the lock arrangement during at least part of the movement of the part of the patient support along the second path.

7. Apparatus as claimed in any preceding Claim including a second pair of first and second paths spaced from the first pair with spaced parts of the patient support being arranged to enter the first and second paths of each pair whereby the patient support is arranged, in use, to be secured at two spaced locations.

8. Apparatus as claimed in Claim 7 in which only one of the pairs includes a lock.

9. Apparatus as claimed in any preceding Claim including wheels that can support the apparatus when moving the apparatus and in which the wheels are arranged to engage spaced rails.

10. A patient support for use in being secured by the apparatus as defined in any preceding Claim.

11. Apparatus as claimed in any preceding Claim in combination with a patient support.

12. A method of securing a patient support comprising causing relative movement of a part of the patient support and securing apparatus along a first path and then a second path extending in a different direction than the first path and preventing relative movement from the second path to the first path by a lock being moved from a first to a second position.

13. A method as claimed in Claim 35 comprising causing the lock member to move to the second position when the part moving along the second path has passed a predetermined extent.

14. A method as claimed in any of Claims 12 to 13 comprising securing a first member of a patient support with the lock and securing a second member of the patient support spaced from the first member by causing the second member to move along a first path and then a second path extending in a different direction to the first path.

15. A method as claimed in any of Claims 35 to 44 causing securing a patient support and moving the part to which the support is secured on wheels rolling on rails.

16. A method of securing a patient support substantially as herein described with reference to and as shown in any of the accompany drawings or when using securing apparatus as claimed in any of Claims 1 to 11.
